# FASCICULE DE BREVET EUROPEEN

(11) **EP 0 496 657 B1**
(45) Date de publication et mention de la délivrance du brevet: **31.08.1994**
(21) Numéro de dépôt: 92400139.9
(22) Date de dépôt: 20.01.1992
(51) Int. Cl.: B60H 1/00

(54) **Dispositif de montage d'un boîtier, notamment d'un appareil de chauffage et/ou de climatisation, sur la carrosserie d'un véhicule automobile**
Montagevorrichtung für ein Gehäuse, insbesondere einer Heizung und/oder einer Klimaanlage, an der Karosserie eines Kraftfahrzeugs
Mounting device for a housing, in particular of a heating and/or air conditioning system, on the structure of a motor vehicle

(30) Priorité: 24.01.1991 FR 9100818
(43) Date de publication de la demande: 29.07.1992
(73) Titulaire: VALEO THERMIQUE HABITACLE, 78320 Le Mesnil-Saint-Denis (FR)
(72) Inventeur: Rollett, Gérard, F-78180 Montigny-Le-Bretonneux (FR)
(74) Mandataire: Gamonal, Didier

(56) Documents cités:
- EP-A- 0 378 851
- DE-C- 3 835 543
- FR-A- 2 409 408
- FR-A- 2 608 101

## Description

L'invention concerne un dispositif de montage d'un boîtier, notamment d'un appareil de chauffage et/ou de climatisation, sur la carrosserie d'un véhicule automobile.

Pour réaliser un tel montage, il est connu d'utiliser au moins une patte de montage qui est rattachée au boîtier et qui est propre à s'engager dans un support en U qui dépend de la carrosserie.

Dans les dispositifs de montage connus de ce genre, la patte de montage est réalisée d'une seule pièce, par exemple par moulage, avec le boîtier ou une partie de ce boîtier. Cette patte est généralement rigide pour lui conférer une résistance élevée vis-à-vis des efforts que subira ultérieurement le boîtier pendant la durée de vie du véhicule. Du fait de sa rigidité, la patte ne peut compenser les dispersions de fabrication que présentent les supports en U fabriqués et montés en série sur les véhicules automobiles.

Il en résulte alors soit une impossibilité de montage, soit un jeu entre la patte et le support en U, qui génère des vibrations et des bruits préjudiciables au bon fonctionnement de l'appareil et aussi au confort des occupants du véhicule.

De plus, l'existence d'un tel jeu peut avoir pour conséquence un désengagement de la patte du support en U et, par conséquent, une désolidarisation du boîtier par rapport à la carrosserie.

De plus, dans le cas d'un accostage du boîtier sur la carrosserie par l'intermédiaire d'un joint d'étanchéité permettant d'assurer l'étanchéité entre cette carrosserie et ce boîtier, un tel jeu peut engendrer des fuites d'air.

Etant donné que, dans les réalisations connues, la patte de montage est monobloc avec le boîtier ou une partie du boîtier, s'il arrive par accident que cette patte se casse, il faut alors changer tout le boîtier, ou au moins une partie du boîtier.

L'invention a notamment pour but de remédier aux inconvénients précités.

C'est, en particulier, un but de l'invention de procurer un tel dispositif de montage qui permet une liaison sans jeu entre la patte de montage et le support en U.

C'est aussi un but de l'invention de procurer un tel dispositif qui permet de compenser les variations dimensionnelles que présentent les supports en U fabriqués en série.

C'est également un but de l'invention de procurer un tel dispositif de montage qui permet d'absorber les défauts de positionnement entre l'appareil et la carrosserie du véhicule correspondant.

C'est encore un but de l'invention de procurer un tel dispositif de montage évitant tout désengagement intempestif ou accidentel de la patte de montage vis-à-vis du support en U.

L'invention propose, à cet effet, un dispositif de montage d'un boîtier, notamment d'un appareil de chauffage et/ou de climatisation, sur la carrosserie d'un véhicule automobile, par l'intermédiaire d'au moins une patte de montage rattachée au boîtier et propre à s'engager dans un support en U dépendant de la carrosserie.

Selon une caractéristique essentielle de l'invention, le dispositif comprend une patte de montage réalisée sous la forme d'un profilé creux et comportant une paroi plane rigide formant face de référence et raccordée à une paroi incurvée déformable tournant sa concavité vers ladite paroi plane, la paroi plane et la paroi incurvée étant propres à prendre appui respectivement contre deux faces en vis-à-vis délimitées par le support en U.

Du fait que la patte de montage comporte deux parois opposées, dont l'une est rigide et forme face de référence, et dont l'autre est déformable, la patte peut compenser les variations dimensionnelles présentées par le support en U par rapport à des cotes données et absorber aussi les défauts de positionnement entre l'appareil et le véhicule.

Selon une autre caractéristique de l'invention, la patte de montage est rattachée à une platine munie de deux glissières espacées propres à s'engager sur deux rails du boîtier.

De ce fait, la platine et la patte forment un ensemble monobloc indépendant du boîtier et qui peut être rattaché à ce boîtier préalablement au montage de ce dernier sur la carrosserie d'un véhicule automobile.

Selon une autre caractéristique de l'invention, la paroi plane rigide possède une épaisseur supérieure à celle de la paroi incurvée déformable. De préférence, cette paroi rigide est renforcée par au moins une nervure s'étendant à l'intérieur et sur la longueur du profilé creux.

Selon une autre caractéristique de l'invention, la patte de montage est rattachée à la platine par sa paroi plane rigide, ce qui facilite ensuite la déformation de la paroi incurvée.

A titre d'exemple, la patte de montage peut être venue de moulage avec la platine, par exemple à partir d'une matière plastique, la paroi incurvée déformable étant, après moulage, rattachée à la platine par un mince voile de matière susceptible d'être brisé dès que la paroi incurvée est soumise à une déformation.

Selon une autre caractéristique de l'invention, la paroi incurvée déformable possède une position de repos dans laquelle l'épaisseur maximale du profilé, dans une direction perpendiculaire à celle de la face de référence, est supérieure à l'intervalle séparant les deux faces en vis-à-vis du support en U.

De cette façon, on est assuré que la patte sera nécessairement engagée sous contrainte entre les deux faces en vis-à-vis du support en U.

Selon une autre caractéristique de l'invention, chacun des deux rails du boîtier possède une extrémité antérieure pour l'introduction d'une glissière de la platine et une extrémité postérieure formant butée pour la glissière en fin d'introduction, les deux rails convergeant depuis leurs extrémités postérieures respectives jusqu'à leurs extrémités antérieures respectives, les deux glissières convergeant de la même façon depuis leurs extrémités postérieures respectives jusqu'à leurs extrémités antérieures respectives.

De préférence, chacun des rails est muni, à son extrémité antérieure, d'une encoche propre à coopérer avec une languette déformable formée à l'extrémité antérieure de la glissière correspondante de la platine, pour s'opposer au retrait de la platine après engagement des glissières sur les rails correspondants.

De ce fait, on obtient une liaison par arc-boutement entre les glissières de la platine d'une part et les rails du boîtier d'autre part.

Le dispositif de l'invention peut s'appliquer notamment au montage d'un boîtier formé de deux moitiés assemblées entre elles.

Dans ce cas, il est particulièrement avantageux de prévoir que les deux rails soient formés respectivement sur les deux moitiés du boîtier.

Ainsi, la platine contribue à l'assemblage et au maintien des deux moitiés de boîtier entre elles.

Dans la description qui suit, donnée seulement à titre d'exemple, on se réfère au dessin annexé, sur lequel:
- la Figure 1 est une vue en coupe partielle montrant l'assemblage d'un boîtier sur la carrosserie d'un véhicule automobile, au moyen d'un dispositif de montage selon l'invention ;
- la Figure 2 est une vue de profil de la patte de montage du dispositif de la Figure 1;
- la Figure 3 est une vue en coupe suivant la ligne III-III de la Figure 1; et
- la Figure 4 est une vue en élévation du dispositif de l'invention monté sur le boîtier.

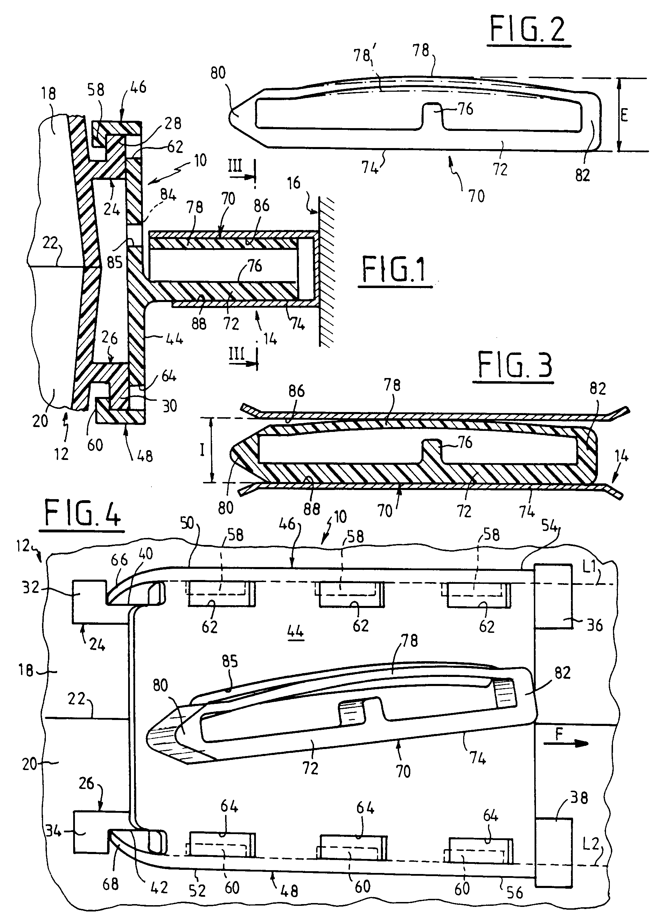

On se réfère tout d'abord à la Figure 1 qui montre un dispositif 10 selon l'invention permettant le montage d'un boîtier 12, par exemple d'un appareil de chauffage et/ou de climatisation, sur un support 14, en forme de U, fixé sur la carrosserie 16 d'un véhicule automobile.

Dans l'exemple (Figures 1 et 4), le boîtier 12 est formé de deux moitiés 18 et 20 assemblées entre elles de part et d'autre d'un plan d'assemblage 22.

Les moitiés 18 et 20 sont, dans l'exemple, chacune venue de moulage à partir d'une matière plastique. Les moitiés 18 et 20 comportent respectivement deux rails 24 et 26 espacés l'un de l'autre et disposés symétriquement par rapport au plan d'assemblage 22. Les rails 24 et 26 ont une section en forme de L et possèdent respectivement des ailes 28 et 30 qui sont tournées dans des directions opposées lorsque les deux moitiés 18 et 20 du boîtier sont assemblées.

Les rails 24 et 26 possèdent des extrémités antérieures respectives 32 et 34 et des extrémités postérieures respectives 36 et 38 formant butée (Figure 4). Les deux rails 32 et 34 sont rectilignes, mais non parallèles. Ils convergent depuis leurs extrémités postérieures 36 et 38 jusqu'à leurs extrémités antérieures 32 et 34, comme montré par les lignes L1 et L2 sur la Figure 4.

En outre, chacun des rails 24 et 26 est muni, à son extrémité antérieure 32 respectivement 34, d'une encoche 40 respectivement 42, formée dans l'aile du rail, et dont le rôle sera explicité plus loin.

Le dispositif 10 comprend une platine 44 de forme sensiblement rectangulaire, munie de deux glissières 46, 48 espacées l'une de l'autre et propres à s'engager respectivement sur les deux rails 24 et 26 du boîtier 12 (Figures 1 et 4). Les glissières 46 et 48 possèdent des extrémités antérieures respectives 50 et 52 et des extrémités postérieures respectives 54 et 56. De même que pour les rails 24 et 26, les deux glissières 46 et 48 convergent depuis leurs extrémités postérieures 54 et 56 jusqu'à leurs extrémités antérieures 50 et 52. La glissière 46 comporte trois griffes 58 propres à s'engager derrière l'aile 28 du rail 24 et, de façon correspondante, la glissière 48 comporte trois griffes 60 propres à s'engager derrière l'aile 30 du rail 26 (Figures 1 et 4).

Dans l'exemple, le dispositif 10 est réalisé d'une seule pièce par moulage d'une matière plastique. La platine 44 comporte trois évidements 62 de forme générale rectangulaire situés en regard des griffes 58 et trois évidements 64 de forme générale rectangulaire situés en regard des griffes 60, pour permettre le démoulage simple de la pièce en matière plastique.

Les extrémités antérieures 50 et 52 des glissières 46 et 48 sont prolongées par des languettes déformables 66 et 68 (Figure 4) qui convergent l'une vers l'autre et qui sont déstinées à s'engager respectivement dans les encoches 40 et 42 des rails 24 et 26 après mise en place de la platine 44 sur les deux moitiés 18 et 20 du boîtier. Ainsi, après engagement des glissières 46 et 48 de la platine 44 sur les rails 24 et 26 du boîtier, dans la direction de la flèche F (Figure 4), la platine 44 vient en butée contre les extrémités 36 et 38 des deux rails, les languettes 66, 68 venant coopérer respectivement avec les encoches 40 et 42. Ces dernières s'opposent alors au retrait de la platine. De plus, du fait de la configuration convergente des deux rails et des deux glissières, la platine 44 exerce, lors de son introduction, une action de serrage sur les deux moitiés 18 et 20 contribuant ainsi à leur bon assemblage.

Le dispositif 10 comprend en outre une patte de montage 70 réalisée sous la forme d'un profilé creux rattaché à la platine 44. La patte 70 est formée d'une seule pièce avec la platine 44 et s'étend dans une direction sensiblement perpendiculaire au plan de la platine 44. La patte 70 est délimitée par des parois à génératrices parallèles et comporte un profil dont la section est représentée sur la Figure 2.

La patte 70 comporte une paroi 72 sensiblement plane et rigide formant, sur son côté extérieur, une face plane de référence 74. La paroi 72 est renforcée par une nervure 76 qui s'étend à l'intérieur du profilé et sur toute la longueur de celui-ci pour rigidifier cette paroi 72.

La patte 70 comporte en outre une paroi incurvée déformable 78 qui est opposée à la paroi plane rigide 72 et qui tourne sa concavité vers cette paroi 72. La paroi 78 possède une épaisseur inférieure à celle de la paroi 72 pour permettre sa déformation. La paroi 78 se raccorde à la paroi 72 par deux bords parallèles entre eux: un bord antérieur 80 de forme effilée et un bord postérieur 82 en forme de U. La patte 70 possède ainsi un profil ressemblant à celui d'une aile d'avion.

Comme montré à la Figure 1, la patte 70 est rattachée à la platine 44 uniquement par sa paroi plane rigide 72, y compris par sa nervure de renforcement 76. Par contre, la paroi 78 n'est pas rattachée à la platine 44 pour permettre sa déformation. Avantageusement, on prévoit que la paroi incurvée déformable 78 est, après moulage, rattachée à la platine 44 par un mince voile de matière susceptible d'être brisé dès que cette paroi incurvée est soumise à déformation. On apperçoit sur la Figure 1 l'endroit 84 où se situait ce voile de matière, au bord d'une découpe 85.

Après démoulage, la paroi incurvée déformable possède une position de repos telle que représentée en trait plein sur la Figure 2. Dans cette position, l'épaisseur maximale E du profilé, dans une direction perpendiculaire à celle de la face de référence 74, est supérieure à l'intervalle I séparant deux faces en vis-à-vis 86 et 88 du support en U 14 (Figure 3).

L'épaisseur maximale E de la patte 70 est choisie de manière à être toujours supérieure à cet intervalle I compte tenu des tolérances de fabrication et des variations dimensionnelles auxquelles sont soumis les supports en U fabriqués en grande série.

La paroi 78 de la patte 70 peut se déformer, en se rapprochant de la paroi opposée 72, pour prendre une position déformée quelconque, telle que celle représentée en traits interrompus sur la Figure 2 (position 78'). Ainsi, lorsque la patte est introduite dans le support en U, la face de référence 74 de la paroi 72 vient s'appliquer contre la face 88 du support 14 tandis que la paroi 78 subit une déformation et vient exercer une pression sur la face interne opposée 86 du support 14 (Figure 3).

Le dispositif de l'invention s'utilise de la façon suivante. Après mise en place du dispositif 10 sur le boîtier 12, par engagement des glissières 46 et 48 sur les rails 24 et 26, il suffit d'introduire la patte 70 dans l'intervalle défini par les deux faces 86 et 88 du support en U 14. Comme la paroi 78 de la patte 70 est déformable, cette dernière vient s'adapter étroitement dans le support en U quelle que soit la cote de l'intervalle I. On peut ainsi compenser les variations dimensionnelles que présente le support en U par rapport aux cotes nominales, et également absorber les défauts de positionnement entre le boîtier 12 et la carrosserie 16 du véhicule.

Après mise en place de la patte, on est assuré que le boîtier ne pourra pas se désolidariser de la carrosserie du véhicule. En effet, la platine 14 ne peut se désolidariser du boîtier en raison de l'existence des languettes 66 et 68 formant organe anti-retour. De plus, la patte 70 exerce un serrage à l'intérieur du support en U.

Il faut noter également que la disposition convergente des rails et des glissières ainsi que la présence des languettes déformables interdit toute erreur de montage de la platine sur le boîtier.

Le boîtier 12 de l'appareil peut être équipé d'un ou plusieurs dispositifs 10 selon l'invention, en fonction des conditions d'implantation offertes par le véhicule.

Bien entendu, l'invention n'est pas limitée au mode de réalisation tel que décrit et représenté et s'étend à d'autres variantes si celles-ci sont couvertes par les revendications.

En particulier, on peut prévoir que les rails 24 et 26 soient formés non pas sur deux parties différentes du boîtier, mais sur une seule partie de celui-ci.

De même, il peut être envisagé que la patte 70 soit élaborée directement à partir du boîtier 12 sans être supportée par une semelle.

## Revendications

1. Dispositif de montage d'un boîtier, notamment d'un appareil de chauffage et/ou de climatisation, sur la carrosserie d'un véhicule automobile, par l'intermédiaire d'au moins une patte de montage (70) rattachée au boîtier (12) et propre à s'engager dans un support en U (14) dépendant de la carrosserie (16), caractérisé en ce que la patte de montage (70) est réalisée sous la forme d'un profilé creux comportant une paroi plane rigide (72) formant face de référence (74) et raccordée à une paroi incurvée déformable (78) tournant sa concavité vers ladite paroi plane (72), la paroi plane (72) et la paroi incurvée (78) étant propres à prendre appui respectivement contre deux faces en vis-à-vis (86, 88) délimitées par le support en U (14).

2. Dispositif selon la revendication 1, caractérisé en ce que la patte (70) est rattachée à une platine (44) munie de deux glissières (46, 48) espacées propres à s'engager sur deux rails (24, 26) du boîtier (12).

3. Dispositif selon l'une des revendications 1 et 2, caractérisé en ce que la paroi plane rigide (72) possède une épaisseur supérieure à celle de la paroi incurvée déformable (78).

4. Dispositif selon l'une des revendications 1 à 3, caractérisé en ce que la paroi plane rigide (72) est renforcée par au moins une nervure (76) s'étendant à l'intérieur et sur la longueur du profilé creux.

5. Dispositif selon l'une des revendications 1 à 4, caractérisé en ce que la patte de montage (70) est rattachée à la platine (44) par la paroi plane rigide (72).

6. Dispositif selon la revendication 5, caractérisé en ce que la patte de montage (70) est venue de moulage avec la platine (44), par exemple à partir d'une matière plastique, la paroi incurvée déformable (78) étant, après moulage, rattachée à la platine (44) par un mince voile de matière (84) susceptible d'être brisé dès que la paroi incurvée (78) est soumise à une déformation.

7. Dispositif selon l'une des revendications 1 à 6, caractérisé en ce que la paroi incurvée déformable (78) possède une position de repos dans laquelle l'épaisseur maximale (E) du profilé, dans une direction perpendiculaire à celle de la face de référence (74), est supérieure à l'intervalle (I) séparant les deux faces en vis-à-vis (86, 88) du support en U (14).

8. Dispositif selon l'une des revendications 1 à 7, caractérisé en ce que chacun des deux rails (24, 26) du boîtier (12) possède une extrémité antérieure (32, 34) pour l'introduction d'une glissière (46, 48) de la platine (14) et une extrémité postérieure (36, 38) formant butée pour la glissière en fin d'introduction, en ce que les deux rails (24, 26) convergent depuis leurs extrémités postérieures (36, 38) jusqu'à leurs extrémités antérieures (32, 34) et en ce que les deux glissières (46, 48) convergent depuis leurs extrémités postérieures (54, 56) jusqu'à leurs extrémités antérieures (50, 52).

9. Dispositif selon la revendication 8, caractérisé en ce que chacun des rails (24, 26) est muni à son extrémité antérieure (32, 34) d'une encoche (40, 42) propre à coopérer avec une languette déformable (66, 68) formée à l'extrémité antérieure (50, 52) de la glissière correspondante (46, 48), pour s'opposer au retrait de la platine (44) après engagement des glissières et des rails.

10. Dispositif selon l'une des revendications 1 à 9, dans lequel le boîtier (12) est formé de deux moitiés (18 et 20) assemblées entre elles, caractérisé en ce que les deux rails (24, 26) sont formés respectivement sur les deux moitiés (18 et 20) du boîtier.

## Claims

1. A mounting for mounting a casing, especially that of a heating and/or air conditioning apparatus, on the bodywork of a motor vehicle through at least one mounting foot (70) attached to the casing (12) and arranged to be engaged in a U-shaped support (14) projecting from the bodywork (16), characterised in that the mounting foot (70) is made in the form of a hollow profiled element having a flat rigid wall (72) defining a reference face (74) and attached to a deformable, curved wall (78), the concavity of which faces towards the said flat wall (72), with the flat wall (72) and the curved wall (78) being adapted to engage respectively against two opposed faces (86, 88) which are delimited by the U-shaped support (14).

2. A mounting according to Claim 1, characterised in that the foot (70) is attached to a shoe portion (44) having two slide elements (46, 48) spaced apart from each other and adapted to engage on two rails (24, 26) of the casing (12).

3. A mounting according to Claim 1 or Claim 2, characterised in that the flat rigid wall (72) has a thickness which is greater than that of the deformable curved wall (78).

4. A mounting according to one of Claims 1 to 3, characterised in that the flat rigid wall (72) is reinforced by at least one rib (76) extending within, and along the length of, the hollow profiled element.

5. A mounting according to one of Claims 1 to 4, characterised in that the mounting foot (70) is attached to the shoe portion (44) by means of the flat rigid wall (72).

6. A mounting according to Claim 5, characterised in that the mounting foot (70) is formed integrally by moulding with the shoe portion (44), for example in a plastics material, with the deformable curved wall (78) being attached, after being moulded, to the shoe portion (44) by a thin, integral web (84) which is adapted to be ruptured once the curved wall (78) is subjected to deformation.

7. A mounting according to one of Claims 1 to 6, characterised in that the deformable curved wall (78) has a relaxed position in which the greatest thickness (E) of the profiled element, in a direction at right angles to that of the reference face (74), is greater than the gap (I) that separates the two opposed faces (86, 88) of the U-shaped support (14).

8. A mounting according to one of Claims 1 to 7, characterised in that each of the two rails (24, 26) of the casing (12) has an anterior end (32, 34) for the introduction of a slide element (46, 48) of the shoe portion (14), and a posterior end (36,38) defining an abutment for the slide element at the completion of introduction, in that the two rails (24, 26) are convergent from their posterior ends (36, 38) towards their anterior ends (32, 34), and in that the two slide elements (46, 48) are convergent from their posterior ends (54, 56) towards their anterior ends (50, 52).

9. A mounting according to Claim 8, characterised in that each of the rails (24, 26) is formed at its anterior end (32, 34) with a notch (40, 42) which is adapted to cooperate with a deformable tongue (66, 68) formed at the anterior end (50, 52) of the corresponding slide element (46, 48), for resisting removal of the shoe portion (44) after engagement of the slide elements and the rails.

10. A mounting according to one of Claims 1 to 9, wherein the casing (12) is formed in two halves (18 and 20) assembled together, characterised in that the two rails (24, 26) are formed respectively on the two halves (18 and 20) of the casing.

## Patentansprüche

1. Montagevorrichtung für ein Gehäuse, insbesondere einer Heizung und/oder einer Klimaanlage, an der Karosserie eines Kraftfahrzeugs, unter Verwendung von mindestens einer an dem Gehäuse (12) angesetzten Montageklammer (70), die in einen zu der Karosserie (16) gehörenden U-förmigen Träger (14) eingreifen kann, **dadurch gekennzeichnet,** daß die Montageklammer (70) in Form eines Hohlprofils ausgeführt ist, das eine starre ebene Wand (72) umfaßt, die eine Bezugsfläche (74) bildet und an eine verformbare gekrümmte Wand (78) angeschlossen ist, deren Hohlfläche zu der ebenen Wand (72) hin gerichtet ist, wobei die ebene Wand (72) und die gekrümmte Wand (78) an zwei gegenüberliegenden Flächen (86, 88) zur Auflage kommen können, die durch den U-förmigen Träger (14) begrenzt werden.

2. Vorrichtung nach Anspruch 1 , **dadurch gekennzeichnet,** daß die Klammer (70) an einer Platte (44) angesetzt ist, die mit zwei in einem Abstand angeordneten Führungen (46, 48) versehen ist, welche auf zwei Schienen (24, 26) des Gehäuses (12) eingreifen können.

3. Vorrichtung nach Anspruch 1 und 2 , **dadurch gekennzeichnet,** daß die starre ebene Wand (72) eine größere Dicke als die verformbare gekrümmte Wand (78) besitzt.

4. Vorrichtung nach einem der Ansprüche 1 bis 3, **dadurch gekennzeichnet,** daß die starre ebene Wand (72) durch mindestens eine Rippe (76) verstärkt ist, die sich im Innern und über die Länge des Hohlprofils erstreckt.

5. Vorrichtung nach einem der Ansprüche 1 bis 4, **dadurch gekennzeichnet,** daß die Montageklammer (70) mit der starren ebenen Wand (72) an der Platte (44) angesetzt ist.

6. Vorrichtung nach Anspruch 5 , **dadurch gekennzeichnet,** daß die Montageklammer (70) einteilig mit der Platte (44) geformt wird, beispielsweise aus einem Kunststoff, wobei die verformbare gekrümmte Wand (78) nach der Formung an der Platte (44) durch einen einstückig ausgeführten dünnen Flansch (84) angesetzt wird, der abgebrochen werden kann, sobald die gekrümmte Wand (78) einer Verformung ausgesetzt wird.

7. Vorrichtung nach einem der Ansprüche 1 bis 6, **dadurch gekennzeichnet,** daß die verformbare gerkümmte Wand (7() eine Ruhestellung besitzt, in der die maximale Dicke (E) des Profils in einer senkrecht zu der Bezugsfläche (74) verlaufenden Richtung größer als der Abstand (I) zwischen den beiden gegenüberliegenden Flächen (86, 88) des U-förmigen Trägers (14) ist.

8. Vorrichtung nach einem der Ansprüche 1 bis 7, **dadurch gekennzeichnet,** daß jede der beiden Schienen (24, 26) des Gehäuses (12) ein vorderes Ende (32, 24) für das Einsetzen einer Führung (46, 48) der Platte (44) sowie ein hinteres Ende (36, 38) besitzt, das einen Anschlag für die Führung am Ende des Einsetzens bildet, daß die beiden Schienen (24, 26) von ihren hinteren Enden (36, 38) aus bis zu ihren vorderen Enden (32, 34) konvergent verlaufen und daß die beiden Führungen (46, 48) von ihren hinteren Enden (54, 56) aus bis zu ihren vorderen Enden (50, 52) konvergent verlaufen.

9. Vorrichtung nach Anspruch 8 , **dadurch gekennzeichnet,** daß jede der Schienen (24, 26) an ihrem vorderen Ende (32, 34) mit einem Einschnitt (40, 42) versehen ist, der mit einer verformbaren Zunge (66, 68) zusammenwirken kann, die an dem vorderen Ende (50, 52) der entsprechenden Führung (46, 48) ausgebildet ist, um dem Rückzug der Platte (44) nach dem Eingreifen der Führungen und der Schienen entgegenzuwirken.

10. Vorrichtung nach einem der Ansprüche 1 bis 9, bei der das Gehäuse (12) aus zwei aneinandergefügten Hälften (18 und 20) besteht, **dadurch gekennzeichnet,** daß die Schienen (24, 26) auf den beiden Hälften (18 bzw. 20) des Gehäuses ausgebildet sind.
